# EUROPÄISCHE PATENTANMELDUNG

(11) **EP 1 220 399 A1**
(43) Veröffentlichungstag der Anmeldung: **03.07.2002**
(21) Anmeldenummer: 01130547.1
(22) Anmeldetag: 21.12.2001
(51) Int. Cl.: H02G 3/04

(54) **Kabelhalteklammer für den Einsatz in Installationskanälen**

(30) Priorität: 29.12.2000 DE 20021969 U
(71) Anmelder: REHAU AG + Co, 95111 Rehau (DE)
(72) Erfinder: Peetz, Matthias, 95111 Rehau (DE); Hermann, Andreas, 95111 Rehau (DE); Heinl, Thomas, 95111 Rehau (DE); Schinzel, Hartmut, 95111 Rehau (DE)

(57) **Zusammenfassung**

Die Erfindung betrifft eine Kabelhalteklammer für den Einsatz in Installationskanälen, die einen annähernd U-förmigen Grundkörper zur Aufnahme von Leitungen zur Übertragung von elektrischem Strom, optischen Signalen und/oder dergleichen aufweist und durch einen Deckel verschließbar sind, wobei die Kabelhalteklammern aus einer Basis und aus von dieser wegragenden Schenkeln bestehen und diese in Öffnungen der umgekragten Seitenwände einbringbar und befestigbar sind. Die Erfindung ist dadurch gekennzeichnet, dass die Kabelhalteklammern in die länglichen Öffnungen einsteckbar und um 90° verdrehbar ausgeführt sind, so dass diese werksseitig mit ihrer freien Seite auf der Umkragung aufliegen bzw. die Umkragung umgreifen.

## Beschreibung

Die Erfindung betrifft eine Kabelhalteklammer für den Einsatz in Installationskanälen, die einen annähernd U-förmigen Grundkörper zur Aufnahme von Leitungen zur Übertragung von elektrischem Strom, optischen Signalen und/oder dergleichen aufweisen und durch ein Abdeckelement verschließbar sind, wobei die Kabelhalteklammern aus einer Basis und aus von dieser wegragenden Schenkeln bestehen und bei geöffnetem Kanal ein Heraustreten der Leitungen verhindern.

Kabelhalteklammern werden eingesetzt, um entsprechende Leitungen oder Leitungsbündel innerhalb des U-förmigen Grundkörpers des Installationskanals zu halten.
Dazu werden diese in Öffnungen der umgekragten Seitenwände des Installationsgrundkörpers gesteckt. Die länglich ausgebildeten Öffnungen verjüngen sich jeweils zu beiden Seiten, wodurch die Kabelhalteklammern beim Verschieben in den sich verjüngenden Bereich geklemmt werden.
Die Kabelhalteklammern werden im Spritzgussverfahren hergestellt. Die so hergestellten Kabelhalteklammern werden anschließend in einer vorgegebenen Anzahl in PolyäthylenBeutel verpackt, die dann per Hand in die Installationskanalunterteile mittels eines Klebebandes eingeklebt werden.
Beim Transport können einzelne Kabelhalteklammern beim Aufreißen der Verpackung oder sogar ganze Verpackungen verloren gehen. Zur Montage der Installationskanäle müssen die verpackten Klammern entnommen und zwischengelagert werden, was wiederum auf Baustellen zum Verlust führen kann.
Des Weiteren sind Installationskanäle bekannt, bei denen werksseitig bereits Kabelhalteklammern in den länglichen Öffnungen eingebracht sind. Dies hat den Nachteil, dass, bevor die Leitungen beziehungsweise Leitungsbündel in das Kanalunterteil eingebracht werden, die Kabelhalteklammern erst ausgerastet werden müssen.

Die Erfindung stellt sich daher die Aufgabe, eine Kabelhalteklammer für Installationskanäle der eingangs genannten Gattung anzugeben, wobei diese so ausgeführt sind, dass die vorbeschriebenen Nachteile beseitigt werden und die Kabelhalteklammern bereits bei

Lieferung eingebracht sind und zwar derart, dass ohne weitere Handgriffe eine Leitungsbelegung möglich ist.

Erfindungsgemäß wird die Aufgabe dadurch gelöst, dass bei dem Installationskanal die Seitenwände des U-förmigen Grundkörpers mit Umkragungen versehen sind, in denen längliche Öffnungen mit nach beiden Seiten hin verjüngenden Bereichen zur Aufnahme der Kabelhalteklammern angeordnet sind. Bei der Lieferung des Installationskanals sind die Kabelhalteklammern in diese Öffnungen eingesteckt und um 90o verdreht, so dass sie mit ihrer freien Seite auf der Umkragung der Seitenwand aufliegen bzw. die Umkragung umgreifen. Die Kabelhalteklammer ist somit nur auf einer Seite verrastet, wobei die Öffnung des u-förmigen Kanalunterteils nur minimal eingeschränkt ist. Die Leitungen beziehungsweise Leitungsbündel können ohne vorheriges Ausrasten der Kabelhalteklammern eingebracht werden.
Die Kabelhalteklammer besteht aus beidseitig an einen Steg angeordneten Rastnocken. Die Breite mindestens eines der Stege ist dabei so ausgeführt, dass dieser innerhalb des Mittelteils der länglichen Öffnung verdreht werden kann, während die Breite des Rastnockens der Breite der Kabelhalteklammer entspricht. Der Steg kann einseitig oder mittig am Rastnocken angeordnet sein. Im weiteren kann der Steg auf der einen Seite der Kabelhalteklammer über die gesamte Breite des Rastnockens ausgeführt werden, während auf der gegenüberliegenden Seite Steg und Rastnocken eine Breite aufweisen, die ein Drehen innerhalb der länglichen Öffnung erlaubt, und diese mittig an der Kabelhalteklammer angeordnet ist.

Die Erfindung soll anhand eines Ausführungsbeispiels näher erläutert werden.

Es zeigen
- Figur 1: Draufsicht auf den Installationskanal mit einseitig aufgerasteter Kabelhalte klammer
- Figur 2: Schnitt durch den Installationskanal mit einseitig aufgerasteter Kabelhalte klammer
- Figur 3: Kabelhalteklammer
- Figur 4: Kabelhalteklammer

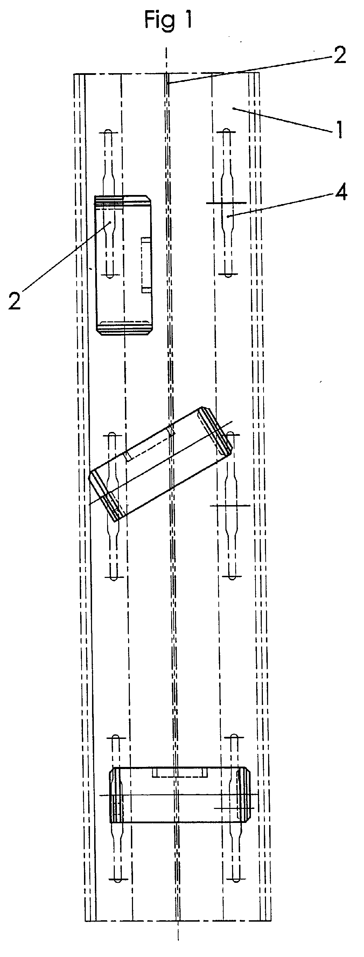

Der Installationskanal Fig. 1- besteht im wesentlichen aus einem U-förmigen Grundkörper, dem Kanalunterteil 1 mit der Trennwand 2, an dessen Seitenwänden Umkragungen 5 angeordnet sind. Die beidseitig angeordneten Umkragungen 5 weisen in einem vorbestimmten Abstand zueinander liegende Öffnungen 4 auf. Die Öffnungen 4 bestehen aus einem breiteren Mittelteil und sich beidseitig daran anschließenden schmaleren Bereichen, in denen die Kabelhalteklammer 3 geklemmt werden kann.

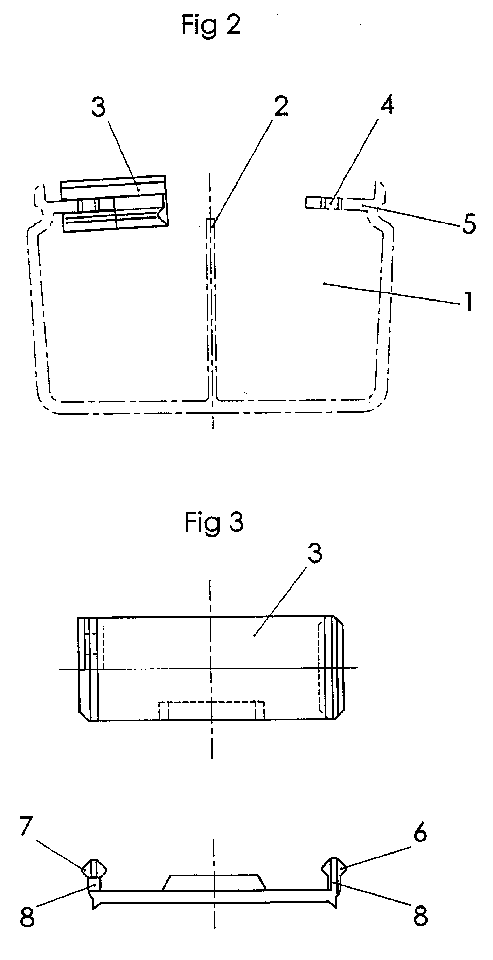

Die werksseitige Anbringung einer Ausführung der Kabelhalteklammer 3 zeigt die Figur 2. Aus der Lage der Kabelhalteklammer 3 ist zu erkennen, dass ein großer Teil der Öffnung des Kanalunterteils 1 noch frei ist. Damit ist gewährleistet, dass ohne vorheriges Verdrehen oder Ausrasten der Kabelhalteklammern 3, Leitungen beziehungsweise Leitungsbündel in den montierten Installationskanal eingebracht werden können.
Die Kabelhalteklammer 3 ist mit dem Steg 8 und dem Rastnocken 7 ihrer einen Seite in die längliche Öffnung 4 eingesteckt und um 90o verdreht. Der Steg 8 und der Rastnocken 6 auf der anderen gegenüberliegenden Seite sind so ausgeführt, dass sie die Umkragung 5 umgreifen.

Die Figur 3 zeigt die erfindungsgemäße Kabelhalteklammer 3 in zwei Ansichten. Diese besteht aus einem Grundkörper, an deren Endbereichen jeweils ein Steg 8 und auf diesen jeweils ein Rastnocken 6 und 7 angeordnet sind.

In dieser Ausführung nehmen die Rastnocken 6 und 7 die gesamte Breite der Kabelhalteklammer 3 ein. Der Steg 8 am Rastnocken 7 ist in einer Breite ausgeführt, die ein Verdrehen innerhalb des mittleren Bereiches der Öffnung 4 erlaubt, und ist auf dem Grundkörper der Kabelhalteklammer 3 in etwa mittig angeordnet. Der Steg 8 auf der gegenüberliegenden Seite der Kabelhalteklammer 3 ist einseitig angeordnet, so dass zwischen Grundkörper und Rastnocken 6 ein freier Raum gebildet wird, wobei der freie Raum ein Aufstecken der Kabelhalteklammer 3 auf die Umkragung 5 erlaubt.

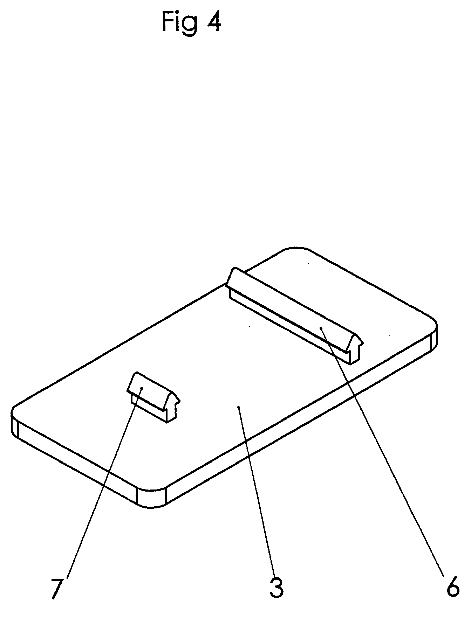

Eine weitere Ausführung der Kabelhalteklammer 3 zeigt die Figur 4. Die Kabelhalteklammer 3 ist so ausgeführt, dass auf der einen Seite des Grundkörpers ein Steg 8 und ein Rastnocken 6 über die gesamte Breite der Kabelhalteklammer 3 angeordnet ist. Auf der gegenüberliegenden Seite ist der Steg 8 so ausgebildet, das ein Verdrehen der Kabelhalteklammer um 90o innerhalb des mittleren Bereiches der Öffnung 4 möglich ist, während der Rastnocken 7 in einer Breite ausgeführt ist, die ein Herausrutschen der verdrehten Kabelhalteklammer 3 verhindert. Bei einer Verdrehung der Kabelhalteklammer 3 wird der gegenüberliegende Rastnocken 6 auf der Umkragung 5 abgelegt.

Nach der Montage des Installationskanals an einer Wand, werden in diesen Leitungen bzw. Leitungsbündel eingebracht. Um ein Heraustreten der Leitungen bzw. Leitungsbündel zu verhindern, werden die Kabelhalteklammern 3 aus ihrer vormontierten Lage verdreht und in den gegenüberliegenden Öffnungen 4 eingesetzt. Durch Verschieben der Kabelhalteklammern 3 in Richtung der schmaleren Seitenbereiche der Öffnungen 4 erfolgt ein Klemmen der Kabelhalteklammern 3.

### Bezugszeichen

- 1 -: Kanalunterteil
- 2 -: Trennwand
- 3 -: Kabelhalteklammer
- 4 -: Öffnungen
- 5 -: Umkragung
- 6 -: Rastnocken
- 7 -: Rastnocken
- 8 -: Steg

## Patentansprüche

1. Kabelhalteklammer für den Einsatz in Installationskanälen, die einen annähernd U-förmigen Grundkörper zur Aufnahme von Leitungen zur Übertragung von elektrischem Strom, optischen Signalen und/oder dergleichen aufweist und durch einen Deckel verschließbar sind, wobei die Kabelhalteklammern aus einer Basis und aus von dieser wegragenden Schenkeln bestehen und diese in Öffnungen der umgekragten Seitenwände einbringbar und befestigbar sind,
**dadurch gekennzeichnet,**
**dass** die Kabelhalteklammern (3) in die länglichen Öffnungen (4) einsteckbar und um 90° verdrehbar ausgeführt sind, so dass diese werksseitig mit ihrer freien Seite auf der Umkragung (5) aufliegen beziehungsweise die Umkragung (5) umgreifen.

2. Kabelhalteklammer nach Anspruch 1, **dadurch gekennzeichnet, dass** die Kabelhalteklammer (3) beidseitig einem Steg (8) sowie einen Rastnocken (6) und (7) aufweisen.

3. Kabelhalteklammer nach Anspruch 1 und 2, **dadurch gekennzeichnet, dass** die Breite mindestens einer der Stege (8) so ausgebildet ist, dass ein Verdrehen um 90° innerhalb der Öffnung (4) möglich ist.

4. Kabelkanalhalteklammer nach Anspruch 1 bis 3, **dadurch gekennzeichnet, dass** der Steg (8) und der Rastnocken (6) auf der einen Seite der Kabelhalteklammer (3) so ausgeführt ist, dass zwischen Grundkörper und Rastnocken (6) ein freier Raum gebildet ist, wobei der Rastnocken (6) und der Grundkörper die Umkragung (5) umgreift.

5. Kabelhalteklammer nach Anspruch 1 bis 4, **dadurch gekennzeichnet, dass** der Steg (8) auf der einen Seite des Grundkörpers der Kabelhalteklammer (3) in etwa mittig mit einer Breite, die ein Verdrehen ermöglicht, angeordnet ist und der auf diesem befindliche Rastnocken (7) eine solche Breite aufweist, die ein Herausrutschen der Kabelhalteklammer (3) während beziehungsweise nach den Verdrehen verhindert.

6. Kabelhalteklammer nach Anspruch 1 bis 5, **dadurch gekennzeichnet, dass** der gegenüberliegende Rastnocken (6) bei Verdrehung der Kabelhalteklammer (3) auf der Umkragung (5) ablegbar ist.
